# FASCICULE DE BREVET EUROPEEN

(11) **EP 3 636 604 B1**
(45) Date de publication et mention de la délivrance du brevet: **30.11.2022**
(21) Numéro de dépôt: 19201583.2
(22) Date de dépôt: 06.10.2019
(51) Int. Cl.: C02F 9/00, C02F 11/04, C02F 11/121, C02F 11/13, C02F 11/128

(54) **PROCÉDÉ DE TRAITEMENT IN SITU DE DÉCHETS BIODÉGRADABLES PAR MÉTHANISATION ET UNITÉ DE TRAITEMENT POUR LA MISE EN OEUVRE DUDIT PROCÉDÉ**
VOR-ORT-BEHANDLUNGSVERFAHREN VON BIOLOGISCH ABBAUBAREN ABFÄLLEN DURCH METHANISIERUNG, UND BEHANDLUNGSEINHEIT ZUR UMSETZUNG DIESES VERFAHRENS
METHOD FOR TREATING BIODEGRADABLE WASTE IN SITU BY METHANISATION AND PROCESSING UNIT FOR IMPLEMENTING SAID METHOD

(30) Priorité: 08.10.2018 FR 1859276
(43) Date de publication de la demande: 15.04.2020
(73) Titulaire: Bee and Co, 33270 Floirac (FR)
(72) Inventeur: PEREZ, Véronique, 33670 Creon (FR); BROUSSE, Philippe, 33670 Creon (FR)
(74) Mandataire: Fantin, Laurent

(56) Documents cités:
- WO-A1-2014/131521
- WO-A2-2014/090377
- US-A1- 2016 376 169
- US-B1- 6 171 499
- US-B1- 7 972 517

## Description

La présente demande se rapporte à un procédé de traitement in situ de déchets biodégradables par méthanisation ainsi qu'à une unité de traitement pour la mise en œuvre dudit procédé.

La méthanisation est largement utilisée pour traiter les déchets biodégradables et les valoriser par la production d'énergie thermique et/ou électrique ainsi que d'un digestat utilisable en tant que compost.

L'invention se rapporte plus particulièrement à un procédé de traitement par méthanisation par voie humide, comme par exemple divulgué dans le document US6171499.

Selon un mode de réalisation connu, un tel procédé de traitement comprend une première étape de broyage des déchets biodégradables, une deuxième étape de dilution consistant à mélanger les déchets biodégradables broyés ainsi qu'une troisième étape de méthanisation dans un digesteur pour produite du gaz et un digestat à partir de déchets biodégradables broyés et dilués.

De préférence, ce procédé de traitement comprend, préalablement à l'étape de méthanisation, une étape d'hygiénisation visant à chauffer et à maintenir le mélange des déchets biodégradables broyés et dilués à une température supérieure à 70°C pendant une durée donnée.

A l'issue de l'étape de méthanisation, le digestat est soumis à une étape de séparation de phase afin d'augmenter son taux de matière sèche. Selon un mode opératoire, une presse à plateaux est utilisée pour cette étape de séparation de phase.

Le gaz produit lors de l'étape de méthanisation est transformé en énergie électrique et thermique dont une partie est utilisée pour les étapes d'hygiénisation et de maintien en température du digesteur.

Ce procédé de traitement par méthanisation par voie humide, adapté pour traiter une quantité journalière importante de déchets (supérieure à une dizaine de tonnes de déchets biodégradables par jour), ne l'est pas pour des quantités de l'ordre de quelques centaines de kilogrammes par jour. Pour de telles quantités traitées, le rendement de l'installation n'est pas optimal, l'étape de séparation de phase, permettant d'augmenter le taux de matière sèche du digestat, absorbant une grande partie de l'énergie électrique produite lors de l'étape de méthanisation.

Par conséquent, les déchets biodégradables sont collectés pour être traités dans des unités de traitement dimensionnées pour des quantités importantes avec des rendements optimisés. Toutefois, le transport des déchets biodégradables vers les unités de traitement conduit à impacter le bilan carbone.

La présente invention vise à remédier aux inconvénients de l'art antérieur.

A cet effet, l'invention a pour objet un procédé de traitement de déchets biodégradables qui comprend, à l'issue d'une étape de méthanisation par voie humide, une étape de séparation de phase qui se caractérise en ce qu'elle comprend une première phase durant laquelle le digestat est tamisé en utilisant un tamiseur vibrant pour obtenir un taux de matière sèche compris entre 10 et 20% et une deuxième phase de séchage durant laquelle le digestat tamisé est conditionné dans des sacs avec chacun une paroi poreuse, les sacs remplis de digestat tamisé séjournant dans un séchoir pendant une période de séchage donnée afin d'obtenir un taux de matière sèche supérieur à 50%.

Selon l'invention, ce phasage de l'étape de séparation de phase permet d'adapter le procédé de traitement à des quantités journalières de déchets biodégradables inférieures à la tonne, de l'ordre de quelques centaines de kilos, et d'optimiser son rendement. Ainsi, il est possible de traiter les déchets biodégradables in situ.

Selon d'autres caractéristiques prises isolément ou en combinaison,
- le tamiseur vibrant utilisé est un tamiseur vibrant circulaire qui présente une grille avec une maille comprise entre 0,05 et 2 mm² ;
- le digestat est déversé au centre de la grille et forme progressivement un boudin qui suit une nervure en forme de spirale ;
- la paroi poreuse des sacs a une maille comprise entre 0,5 et 2 mm² ;
- le séchoir est alimenté en air qui est chauffé à l'aide d'un fluide chaud produit à partir du gaz généré lors de l'étape de méthanisation ;
- la période de séchage a une durée supérieure à 10 jours ;
- les sacs sont suspendus sur un manège qui est pivoté quotidiennement d'un pas correspondant à un angle égal à 360° divisé par le nombre de jours de la période de séchage.

L'invention a également pour objet une unité de traitement de déchets biodégradables comprenant :
- un digesteur qui présente une alimentation en déchets biodégradables, une sortie de gaz et une sortie de digestat,
- au moins un système de transformation du gaz produit par le digesteur en énergie thermique et/ou électrique,
- un dispositif de séparation de phase du digestat,
caractérisée en ce que le dispositif de séparation de phase comprend :
- un tamiseur vibrant relié à la sortie de digestat du digesteur et configuré pour que le digestat tamisé ait un taux de matière sèche compris entre 10 et 20%,
- un séchoir dans lequel sont positionnés des sacs, remplis de digestat tamisé, pendant une période de séchage donnée, afin d'obtenir un taux de matière sèche supérieur à 50%, les sacs ayant chacun une paroi poreuse.

D'autres caractéristiques et avantages ressortiront de la description de l'invention qui va suivre, description donnée à titre d'exemple uniquement, en regard des dessins annexés parmi lesquels :
- La figure 1 est une représentation schématique d'une unité de traitement de déchets biodégradables qui illustre un mode de réalisation de l'invention,
- La figure 2 est une représentation schématique d'un tamiseur vibrant qui illustre un mode de réalisation de l'invention,
- La figure 3 est une représentation schématique d'un séchoir qui illustre un mode de réalisation de l'invention,
- La figure 4 est une vue en perspective d'une partie d'une unité de traitement de déchets biodégradables qui illustre un mode de réalisation de l'invention,
- La figure 5 est une vue en perspective d'un sac utilisé dans un séchoir qui illustre un mode de réalisation de l'invention,
- La figure 6 est une coupe longitudinale du sac visible sur la figure 5,
- La figure 7 est une vue de détails de l'extrémité supérieure du sac visible sur la figure 5,
- La figure 8 est une vue de détails de l'extrémité inférieure du sac sur la figure 5, à l'état ouvert, et
- La figure 9 est une coupe de l'extrémité inférieure du sac à l'état fermé.

Une unité de traitement de déchets biodégradables par méthanisation par voie humide comprend un digesteur 10 qui présente une alimentation 12 en déchets biodégradables, une sortie de gaz 14 et une sortie de digestat 16.

Pour la présente demande, les déchets biodégradables comprennent tous les déchets alimentaires et verts.

Selon un mode de réalisation, le digesteur 10 comprend une cuve 18 hermétique et calorifugée qui a une contenance comprise entre 15 et 30 m³. A titre indicatif, la cuve a une contenance de l'ordre de 20 m³.

La cuve 18 peut être thermo-régulée et comprendre, au niveau de sa paroi, un circuit dans lequel circule un fluide chaud, comme de l'eau chaude par exemple.

Selon une configuration, la cuve 18 comprend un corps 18.1 cubique ou parallélépipédique surmonté d'un dôme 18.2. L'alimentation 12 en déchets biodégradables débouche en partie inférieure du corps 18.1. La sortie de gaz 14 est positionnée au niveau du dôme 18.2, plus particulièrement au niveau latéral du dôme 18.2. La sortie de digestat 16 est positionnée dans la moitié inférieure du corps 18.1.

La cuve 18 est instrumentée et équipée par exemple d'un capteur de niveau, d'un pH-mètre, d'au moins un capteur de température, d'au moins un capteur de pression, d'un débitmètre pour mesurer la quantité de gaz produit.

En fonctionnement, la cuve 18 contient un mélange d'une phase liquide et de déchets biodégradables, appelé mélange intrant, surmonté d'une phase gazeuse, appelée ciel. Ce mélange intrant est introduit dans la cuve 18 via l'alimentation 12 puis génère du gaz, qui sort de la cuve 18 via la sortie de gaz 14, et un digestat qui est extrait de la cuve via la sortie de digestat 16.

La composition et le volume du mélange intrant et le volume de digestat extrait sont ajustés de manière à obtenir un procédé de méthanisation le plus stable possible.

En amont du digesteur 10, l'unité de traitement de déchets biodégradables par méthanisation par voie humide comprend un système de broyage 20 et un système de pasteurisation 22.

Le système de broyage 20 est configuré pour réceptionner les déchets biodégradables et les broyer de manière à obtenir une granulométrie la plus homogène possible. Selon un mode de fonctionnement, le système de broyage 20 est réglé de manière à obtenir une granulométrie de l'ordre de 12 mm de diamètre.

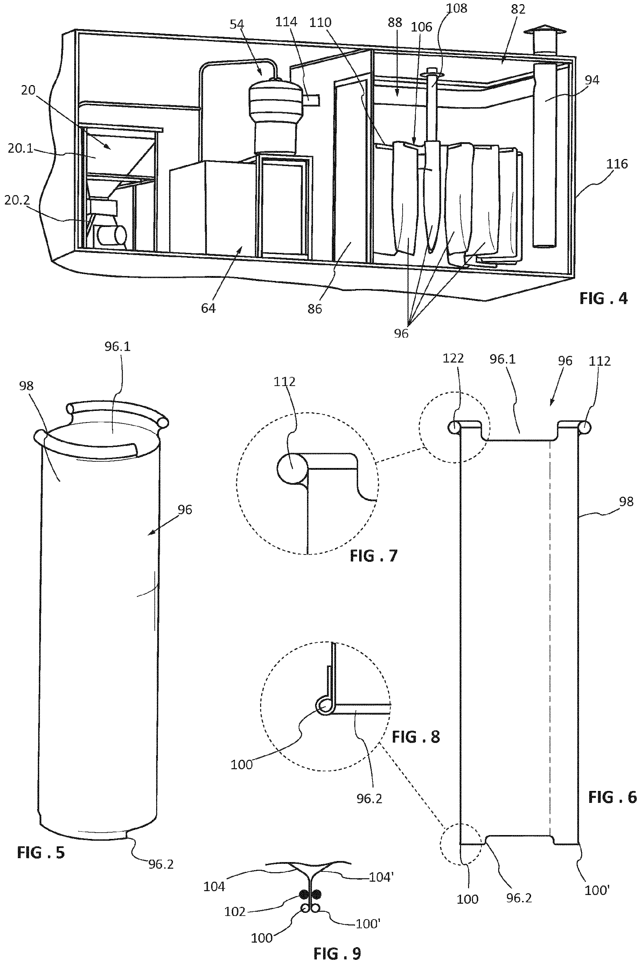

Selon un mode de réalisation visible sur la figure 4, le système de broyage 20 comprend en partie supérieure une trémie 20.1 configurée pour réceptionner les déchets biodégradables et en partie inférieure un broyeur 20.2.

Le système de broyage 20 peut être instrumenté et comprendre un système de pesée pour déterminer la quantité introduite de déchets biodégradables.

Le système de pasteurisation 22 est configuré pour chauffer le mélange intrant afin de l'hygiéniser avant son introduction dans le digesteur 10.

Ainsi, le mélange intrant est porté à une température supérieure ou égale à 70°C pendant une durée déterminée, d'environ une heure par exemple.

Le système de pasteurisation 22 comprend une cuve 24 qui présente une alimentation en déchets biodégradables broyés 26 reliée, grâce à une canalisation 28, à la sortie du système de broyage 20, une alimentation en phase liquide 30 (en eau par exemple), et une sortie 32, reliée grâce à une canalisation 34, à l'alimentation 12 du digesteur 10.

La cuve 24 est équipée d'un système de chauffage et d'un mélangeur. Selon une configuration, le système de chauffage est un serpentin 36 dans lequel circule un fluide chaud, comme par exemple de l'eau chaude.

La cuve 24 peut être instrumentée et équipée par exemple d'un capteur de température, d'un capteur de niveau.

En fonctionnement, les déchets biodégradables broyés sont introduits dans la cuve 24 et mélangés avec une phase liquide, notamment de l'eau. Ce mélange, correspondant au mélange intrant, est chauffé pour l'hygiéniser. Enfin, le mélange intrant chauffé et hygiénisé est introduit dans le digesteur 10.

Le système de broyage, le système de pasteurisation et le digesteur sont dimension nés pour fonctionner de manière optimale pour une quantité journalière de déchets biodégradables de l'ordre de 50 à 2500 Kg, de préférence de l'ordre de 650 Kg.

En complément, l'unité de traitement de déchets biodégradables par méthanisation par voie humide comprend au moins un système de transformation du gaz produit par le digesteur en énergie thermique et/ou électrique.

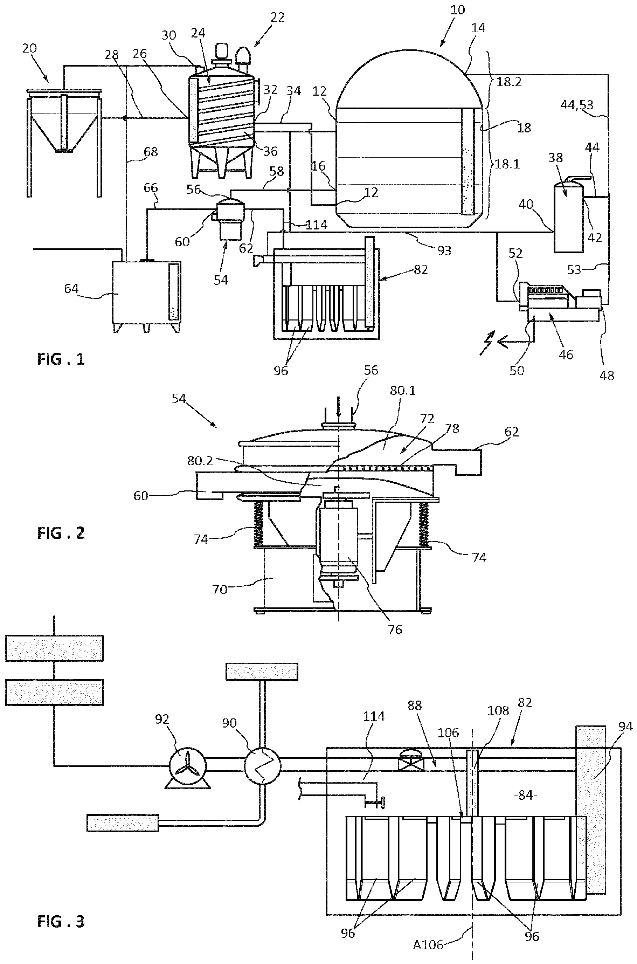

Selon un mode de réalisation visible sur la figure 1, l'unité de traitement de déchets biodégradables par méthanisation par voie humide comprend :
- une chaudière 38 qui présente un brûleur, une sortie d'eau chaude 40 et une alimentation en gaz 42 reliée par une canalisation 44 à la sortie de gaz 14 du digesteur 10. En fonctionnement, le brûleur de la chaudière 38 est configuré pour brûler le gaz produit dans le digesteur 10 et chauffer de l'eau chaude ;
- un moteur thermique 46 qui présente une alimentation en gaz 48, une sortie électrique 50, une sortie d'eau chaude 52 et un circuit de refroidissement. L'alimentation en gaz 48 est reliée à la sortie de gaz 14 du digesteur 10 par une canalisation 53 qui comprend un tronçon commun avec la canalisation 44 reliée à la chaudière 38. En fonctionnement, le moteur thermique 46 est configuré pour convertir le gaz en énergie électrique, son circuit de refroidissement produisant de l'eau chaude.

Bien entendu, l'invention n'est pas limitée à une chaudière 38 et/ou à un moteur thermique 46 pour transformer le gaz produit par le digesteur 10 en énergie électrique et/ou thermique. En sortie du digesteur 10, l'unité de traitement de déchets biodégradables par méthanisation par voie humide comprend un dispositif de séparation de phase configuré pour augmenter le taux de matière sèche du digestat.

Ce dispositif de séparation de phase comprend un tamiseur vibrant 54 qui présente une entrée 56 reliée, par une canalisation 58, à la sortie de digestat 16 du digesteur 10, une première sortie 60 pour évacuer la phase liquide, notamment l'eau, et une deuxième sortie 62 via laquelle sort le digestat tamisé. Le tamiseur vibrant 54 est configuré pour que le digestat tamisé ait un taux de matière sèche compris entre 10 et 20%, de l'ordre de 15%. En complément du tamiseur vibrant 54, l'unité de traitement comprend un réservoir de liquide 64 configuré pour stocker la phase liquide extraite du digestat dans le tamiseur vibrant 54, cette phase liquide pouvant être mélangée avec les déchets biodégradables et/ou les déchets biodégradables broyés dans le système de broyage 20 et/ou le système de pasteurisation 22. Ainsi, la première sortie 60 du tamiseur vibrant 54 est reliée au réservoir de liquide 64 par une canalisation 66, ledit réservoir de liquide 64 étant relié par une canalisation 68 au système de broyage 20 et/ou au système de pasteurisation 22.

Selon un mode de réalisation illustré par la figure 2, le tamiseur vibrant 54 est un tamiseur vibrant circulaire. Il comprend un châssis fixe 70 et une partie supérieure vibrante 72 reliée au châssis fixe 70 par une liaison souple comme par exemple une pluralité de ressorts 74.

Le tamiseur vibrant circulaire 54 comprend également un moteur balourd 76 solidaire du châssis fixe 70 et configuré pour faire vibrer la partie supérieure 72. La partie supérieure vibrante 72 comprend une enceinte scindée par une grille 78 horizontale en une partie haute 80.1 et une partie basse 80.2. L'entrée 56 du tamiseur vibrant 54 est positionnée au-dessus de la grille 78, approximativement à l'aplomb du centre de la grille 78.

Selon une configuration, la grille 78 a une maille comprise entre 0,05 et 2 mm².

La grille 78 présente, sur sa face supérieure, au moins une nervure en forme de spirale.

Les vibrations produites par le moteur balourd 76 sont telles que le digestat déversé au centre de la grille 78 forme progressivement un boudin qui suit la nervure en spirale jusqu'à la deuxième sortie 62 au niveau de laquelle le digestat tamisé présente un taux de matière sèche de l'ordre de 15%. Une partie de la phase liquide du digestat s'écoule au travers de la grille 78, pendant le déplacement du digestat au contact de la grille 78, ladite phase liquide étant collectée dans la partie basse 80.2 et orientée vers la première sortie 60 pour être évacuée vers le réservoir 64.

Le dispositif de séparation de phase comprend, en sortie du tamiseur vibrant 54, un séchoir 82 pour retirer une partie de la phase liquide et augmenter le taux de matière sèche.

Selon un mode de réalisation illustré par les figures 3 et 4, le séchoir 82 comprend une enceinte 84 calorifugée qui présente une porte 86 pour évacuer le digestat tamisé et séché. Le séchoir 82 comprend un circuit de diffusion 88 configuré pour diffuser de l'air chaud dans l'enceinte 84, un échangeur 90 configuré pour chauffer l'air véhiculé dans le circuit de diffusion 88 et un générateur de flux 92 configuré pour propulser de l'air à travers l'échangeur 90 puis dans le circuit de diffusion 88.

Le séchoir 82 comprend également une cheminée 94 pour prélever de l'air en partie inférieure de l'enceinte 84 et le refouler à l'extérieur du séchoir 82

Selon un mode de fonctionnement, l'échangeur 90 utilise l'eau chaude produite par la chaudière 38 et/ou le moteur thermique 46 pour chauffer l'air. Selon un mode de fonctionnement, l'échangeur 90 utilise l'eau chaude produite lors du refroidissement du moteur thermique 46.

A cet effet, l'unité de traitement de déchets biodégradables comprend au moins une canalisation 93 pour canaliser un fluide chaud depuis le système de transformation du gaz, produit par le digesteur 10, jusqu'à l'échangeur 90.

Dans le séchoir 82, le digestat tamisé est conditionné dans des sacs 96 qui présentent chacun une paroi poreuse 98.

Selon une configuration, la paroi poreuse 98 des sacs 96 a une maille comprise entre 0,5 et 2 mm², de préférence de l'ordre de 1 mm².

Le séchoir 82 est configuré pour maintenir dans l'enceinte 84 une température de l'ordre de 55°C pendant au moins 70 heures, et ce sur une période de séchage d'environ 14 à 16 jours. La combinaison du séchoir 82 et du conditionnement en sacs avec une paroi poreuse permet d'obtenir un taux de matière sèche de l'ordre de 60% à l'issue de la période de séchage. Selon un mode de réalisation, chaque sac 96 a une forme tubulaire qui présente une extrémité supérieure 96.1 ouverte et une extrémité inférieure 96.2.

Comme illustré sur la figure 8, l'extrémité inférieure 96.2 comprend, au moins sur une partie de sa circonférence, au moins un jonc 100. Selon une configuration, la partie inférieure comprend deux joncs 100, 100', diamétralement opposés, qui s'étendent chacun sur au moins un quart de la circonférence de l'extrémité inférieure 96.2.

Pour maintenir l'extrémité inférieure 96.2 fermée, les deux joncs 100, 100' sont rapprochés et une pince 102 en forme de U, positionnée au-dessus des joncs 100, 100', maintient deux faces 104, 104', opposées de la paroi poreuse 98 du sac 96, plaquées l'une contre l'autre, comme illustré sur la figure 9.

Ainsi, selon ce mode de réalisation, chaque sac 96 est configuré pour occuper un état fermé, pendant la période de séchage, lorsque la pince 102 est mise en place sur le sac 96 et un état ouvert, pour sortir le digestat à l'issue de la période de séchage, lorsque la pince 102 est retirée.

Bien entendu, l'invention n'est pas limitée à cette forme de sac et à cette configuration pour ouvrir et fermer la partie inférieure des sacs. Selon d'autres modes de réalisation, l'extrémité inférieure 96.2 de chaque sac pourrait être toujours fermée. Dans ce cas, le digestat serait introduit dans le sac et sorti depuis l'extrémité supérieure 96.1.

Pour donner un ordre de grandeur, chaque sac a une hauteur de l'ordre de 120 cm et un diamètre de l'ordre de 35 cm, soit une contenance d'environ 90 à 100 l.

Quel que soit le mode de réalisation, chaque sac a une hauteur comprise entre 50 et 150 cm et une section comprise entre 20 et 50 cm.

Pour maintenir les sacs 96, le séchoir 82 comprend au moins un manège 106, pivotant autour d'un axe de rotation A106, qui présente des supports 110 pour suspendre les sacs 96.

Selon une configuration visible sur les figures 3 et 4, les supports 110 peuvent être montés pivotant sur un mât 108 fixe, positionné dans l'enceinte, ou être montés fixes sur un mât 108 pivota nt.

Les supports 110 s'étendent perpendiculairement à l'axe de rotation A106 et sont régulièrement répartis autour dudit axe de rotation A106.

Chaque support 110 présente un couple de branches en forme de U ou de Y sensiblement horizontales. En complément, chaque sac comprend, au niveau de son extrémité supérieure 96.1, deux ourlets 112 chacun configurés pour s'emmancher sur les branches du support 110 afin de maintenir l'extrémité supérieure 96.1 de chaque sac ouverte.

Selon un mode de réalisation, le manège 106 est configuré pour supporter de quatorze à seize sacs 96. A cet effet, il comprend seize supports 110.

Ainsi, chaque jour, le support est pivoté manuellement d'un pas, correspondant à 1/16^{ème} de tour. Le sac rempli depuis au moins quatorze jours et ayant fait un tour est vidé puis rempli de nouveau avec du digestat tamisé issu du tamiseur vibrant 54.

Quel que soit le mode de réalisation, le nombre de supports 110 est égal à un multiple du nombre de jours de la période de séchage et le manège 106 est pivoté quotidiennement d'un pas correspondant à un angle égal à 360° divisé par le nombre de jours de la période de séchage.

Bien entendu, l'invention n'est pas limitée à cette configuration pour suspendre les sacs.

Le dispositif de séparation de phase comprend également une canalisation 114 pour acheminer le digestat tamisé depuis la deuxième sortie 62 du tamiseur vibrant 54 jusque dans l'enceinte 84 du séchoir 82 et le déverser dans un sac 96. Selon un mode de réalisation, la canalisation 114 est une gaine souple dont une extrémité débouche à l'aplomb d'un des sacs 96 supportés par le support 96.

Quel que soit le mode de réalisation, le procédé de traitement des déchets biodégradables comprend, à l'issue de l'étape de méthanisation, une étape de séparation de phase qui présente une première phase durant laquelle le digestat est tamisé en utilisant un tamiseur vibrant 54 pour obtenir un taux de matière sèche compris entre 10 et 20% et une deuxième phase de séchage durant laquelle le digestat tamisé est conditionné dans des sacs 96 avec chacun une paroi poreuse 98, les sacs remplis de digestat tamisé séjournant dans un séchoir 82 pendant une période de séchage donnée, supérieure à 10 jours, permettant d'obtenir un taux de matière sèche supérieur à 50%.

Comme illustré sur la figure 4, l'unité de traitement est conditionnée dans au moins un conteneur 116 et peut être aisément installée à proximité d'un site de production de déchets biodégradables, comme par exemple un magasin de distribution alimentaire, pour les traiter in situ.

Comme illustré sur la figure 1, le fluide chaud (l'eau chaude) produit par la chaudière 38 et/ou le moteur thermique 46 est utilisé pour maintenir le digesteur 10 en température, pour chauffer le mélange intrant du système de pasteurisation 22 et pour chauffer l'air utilisé dans le séchoir 82.

Une partie de l'électricité produite par le moteur thermique 46 est utilisée par l'unité de traitement pour alimenter entre autres :
- les différentes pompes servant à véhiculer les déchets biodégradables, le mélange intrant, le digestat, l'eau chaude et/ou froide, pour souffler l'air chaud dans le séchoir 82,
- le broyeur utilisé pour broyer les déchets biodégradables,
- le tamiseur vibrant 54,
- l'automatisme pour piloter l'unité de traitement.

## Revendications

1. Procédé de traitement de déchets biodégradables comprenant une étape de méthanisation par voie humide, pour produire un gaz et un digestat à partir de déchets biodégradables broyés et mélangés à une phase liquide, et une étape de séparation de phase pour augmenter le taux de matière sèche du digestat, **caractérisé en ce que** l'étape de séparation de phase comprend une première phase, durant laquelle le digestat est tamisé en utilisant un tamiseur vibrant (54) pour obtenir un taux de matière sèche compris entre 10, et 20% et une deuxième phase de séchage durant laquelle le digestat tamisé est conditionné dans des sacs (96) avec chacun une paroi poreuse (98), les sacs (96) remplis de digestat tamisé séjournant dans un séchoir (82) pendant une période de séchage donnée afin d'obtenir un taux de matière sèche supérieur à 50%.

2. Procédé de traitement de déchets biodégradables selon la revendication 1, **caractérisé en ce que** le tamiseur vibrant (54) utilisé est un tamiseur vibrant circulaire qui présente une grille (78) avec une maille comprise entre 0,05 et 2 mm².

3. Procédé de traitement de déchets biodégradables selon la revendication 2, **caractérisé en ce que** le digestat est déversé au centre de la grille (78) et forme progressivement un boudin qui suit une nervure en forme de spirale.

4. Procédé de traitement de déchets biodégradables selon l'une des revendications précédentes, **caractérisé en ce que** la paroi poreuse (98) des sacs (96) a une maille comprise entre 0,5 et 2 mm².

5. Procédé de traitement de déchets biodégradables selon l'une des revendications précédentes, **caractérisé en ce que** le séchoir (82) est alimenté en air qui est chauffé à l'aide d'un fluide chaud produit à partir du gaz généré lors de l'étape de méthanisation.

6. Procédé de traitement de déchets biodégradables selon l'une des revendications précédentes, **caractérisé en ce que** la période de séchage a une durée supérieure à 10 jours.

7. Procédé de traitement de déchets biodégradables selon l'une des revendications précédentes, **caractérisé en ce que** les sacs (96) sont suspendus sur un manège (106) qui est pivoté quotidiennement d'un pas correspondant à un angle égal à 360° divisé par le nombre de jours de la période de séchage.

8. Unité de traitement de déchets biodégradables comprenant :
- un digesteur (10) qui présente une alimentation (12) en déchets biodégradables, une sortie de gaz (14) et une sortie de digestat (16),
- au moins un système de transformation du gaz produit par le digesteur (10) en énergie thermique et/ou électrique,
- un dispositif de séparation de phase du digestat,
**caractérisée en ce que** le dispositif de séparation de phase comprend :
- un tamiseur vibrant (54) relié à la sortie de digestat (16) du digesteur (10) et configuré pour que le digestat tamisé ait un taux de matière sèche compris entre 10 et 20%,
- un séchoir (82) dans lequel sont positionnés des sacs (96), remplis de digestat tamisé, pendant une période de séchage donnée, afin d'obtenir un taux de matière sèche supérieur à 50%, les sacs (96) ayant chacun une paroi poreuse (98).

9. Unité de traitement de déchets biodégradables selon la revendication précédente, **caractérisée en ce que** le tamiseur vibrant (54) utilisé est un tamiseur vibrant circulaire qui présente une grille avec une maille comprise entre 0,05 et 2 mm².

10. Unité de traitement de déchets biodégradables selon l'une des revendications 8 à 9, **caractérisée en ce que** la paroi poreuse (98) des sacs a une maille comprise entre 0,5 et 2 mm².

11. Unité de traitement de déchets biodégradables selon l'une des revendications 8 à 10, **caractérisé en ce que** chaque sac a une hauteur comprise entre 50 et 150 cm et une section comprise entre 20 et 50 cm.

12. Unité de traitement de déchets biodégradables selon l'une des revendications 8 à 11, **caractérisée en ce que** le séchoir (82) comprend une enceinte (84) calorifugée, un circuit de diffusion (88) configuré pour diffuser de l'air chaud dans l'enceinte (84), un échangeur (90) configuré pour chauffer l'air véhiculé dans le circuit de diffusion (88) et un générateur de flux (92) configuré pour propulser de l'air à travers l'échangeur (90) puis dans le circuit de diffusion (88).

13. Unité de traitement de déchets biodégradables selon la revendication précédente, **caractérisée en ce qu'**elle comprend au moins une canalisation (93) pour canaliser un fluide chaud depuis le système de transformation du gaz, produit par le digesteur (10), jusqu'à l'échangeur (90).

14. Unité de traitement de déchets biodégradables selon l'une des revendications 8 à 13, **caractérisée en ce que** le séchoir (82) comprend au moins un manège (106), pivotant autour d'un axe de rotation (A106), qui présente des supports (110), pour suspendre les sacs (96), qui s'étendent perpendiculairement à l'axe de rotation (A106) et qui sont régulièrement répartis autour dudit axe de rotation (A106).

15. Unité de traitement de déchets biodégradables selon la revendication précédente, **caractérisée en ce que** chaque support (110) comprend un couple de branches en forme de U ou de Y sensiblement horizontales et **en ce que** chaque sac (96) comprend, au niveau de son extrémité supérieure (96.1), deux ourlets (112) configurés pour s'emmancher sur les branches du support (110) afin de maintenir l'extrémité supérieure (96.1) du sac (96) ouverte.

## Patentansprüche

1. Verfahren zur Behandlung von biologisch abbaubaren Abfällen, mit einem Nassmethanisierungsschritt, um ein Gas und einen Gärrest aus zerkleinerten und mit einer flüssigen Phase vermischten biologisch abbaubaren Abfällen zu erzeugen, und mit einen Phasentrennungsschritt, um den Trockensubstanzgehalt des Gärrests zu erhöhen, **dadurch gekennzeichnet, dass** der Phasentrennungsschritt eine erste Phase umfasst, in der der Gärrest unter Verwendung einer Vibrationssiebmaschine (54) gesiebt wird, um einen Trockensubstanzgehalt zwischen 10 und 20 % zu erhalten, und eine zweite Trocknungsphase umfasst, in der der gesiebte Gärrest in Säcken (96) mit jeweils einer porösen Wand (98) verpackt wird, wobei die mit gesiebtem Gärrest gefüllten Säcke (96) für eine bestimmte Trocknungsperiode in einem Trockner (82) verbleiben, um einen Trockensubstanzgehalt von mehr als 50 % zu erhalten.

2. Verfahren zur Behandlung von biologisch abbaubaren Abfällen nach Anspruch 1, **dadurch gekennzeichnet, dass** die verwendete Vibrationssiebmaschine (54) eine Kreisvibrationssiebmaschine ist, die ein Gitter (78) mit einer Maschenweite zwischen 0,05 und 2 mm² aufweist.

3. Verfahren zur Behandlung von biologisch abbaubaren Abfällen nach Anspruch 2, **dadurch gekennzeichnet, dass** der Gärrest in die Mitte des Gitters (78) geschüttet wird und allmählich einen Strang bildet, der einer spiralförmigen Rippe folgt.

4. Verfahren zur Behandlung von biologisch abbaubaren Abfällen nach einem der vorhergehenden Ansprüche, **dadurch gekennzeichnet, dass** die poröse Wand (98) der Säcke (96) eine Maschenweite zwischen 0,5 und 2 mm² hat.

5. Verfahren zur Behandlung von biologisch abbaubaren Abfällen nach einem der vorhergehenden Ansprüche, **dadurch gekennzeichnet, dass** der Trockner (82) mit Luft versorgt wird, die mit Hilfe eines warmen Fluids aufgewärmt wird, das aus dem im Methanisierungsschritt erzeugten Gas erzeugt wird.

6. Verfahren zur Behandlung von biologisch abbaubaren Abfällen nach einem der vorhergehenden Ansprüche, **dadurch gekennzeichnet, dass** die Trocknungsperiode eine Dauer von mehr als 10 Tagen hat.

7. Verfahren zur Behandlung von biologisch abbaubaren Abfällen nach einem der vorhergehenden Ansprüche, **dadurch gekennzeichnet, dass** die Säcke (96) an einem Karussell (106) aufgehängt werden, das täglich um einen Schritt gedreht wird, der einem Winkel entspricht, der gleich 360° geteilt durch die Anzahl der Tage der Trocknungsperiode ist.

8. Einheit zur Behandlung von biologisch abbaubaren Abfällen mit:
- einem Bioreaktor (10), der eine Zuführung (12) für biologisch abbaubare Abfälle, einen Gasauslass (14) und einen Gärrestauslass (16) aufweist,
- wenigstens einem System zur Umwandlung des vom Bioreaktor (10) erzeugten Gases in thermische und/oder elektrische Energie,
- eine Vorrichtung zur Phasentrennung des Gärrests,
**dadurch gekennzeichnet, dass** die Vorrichtung zur Phasentrennung umfasst:
- eine Vibrationssiebmaschine (54), die mit dem Gärrestauslass (16) des Bioreaktors (10) verbunden und so eingerichtet ist, dass der gesiebte Gärrest einen Trockensubstanzgehalt zwischen 10 und 20% hat,
- einen Trockner (82), in dem Säcke (96), die mit gesiebtem Gärrest gefüllt sind, während einer bestimmten Trocknungsperiode positioniert sind, um einen Trockensubstanzgehalt von mehr als 50% zu erhalten, wobei die Säcke (96) jeweils eine poröse Wand (98) aufweisen.

9. Einheit zur Verarbeitung von biologisch abbaubaren Abfällen nach dem vorhergehenden Anspruch, **dadurch gekennzeichnet, dass** die verwendete Vibrationssiebmaschine (54) eine kreisförmige Vibrationssiebmaschine ist, die ein Gitter mit einer Maschenweite zwischen 0,05 und 2 mm² aufweist.

10. Einheit zur Behandlung von biologisch abbaubaren Abfällen nach einem der Ansprüche 8 bis 9, **dadurch gekennzeichnet, dass** die poröse Wand (98) der Säcke eine Maschenweite zwischen 0,5 und 2 mm² hat.

11. Einheit zur Behandlung von biologisch abbaubaren Abfällen nach einem der Ansprüche 8 bis 10, **dadurch gekennzeichnet, dass** jeder Sack eine Höhe zwischen 50 und 150 cm und einen Querschnitt zwischen 20 und 50 cm hat.

12. Einheit zur Behandlung von biologisch abbaubaren Abfällen nach einem der Ansprüche 8 bis 11, **dadurch gekennzeichnet, dass** der Trockner (82) ein wärmeisoliertes Gehäuse (84), einen Diffusionskreislauf (88), der so eingerichtet ist, dass er warme Luft in das Gehäuse (84) diffundiert, einen Wärmetauscher (90), der so eingerichtet ist, dass er die in dem Diffusionskreislauf (88) beförderte Luft erwärmt, und einen Strömungsgenerator (92) umfasst, der so eingerichtet ist, dass er Luft durch den Wärmetauscher (90) und dann in den Diffusionskreislauf (88) treibt.

13. Einheit zur Behandlung von biologisch abbaubaren Abfällen nach dem vorhergehenden Anspruch, **dadurch gekennzeichnet, dass** diese wenigstens eine Rohrleitung (93) umfasst, um ein warmes Fluid von dem System zur Umwandlung des Gases, das von dem Bioreaktor (10) erzeugt wird, zu dem Wärmetauscher (90) zu leiten.

14. Einheit zur Behandlung von biologisch abbaubaren Abfällen nach einem der Ansprüche 8 bis 13, **dadurch gekennzeichnet, dass** der Trockner (82) wenigstens ein um eine Drehachse (A106) drehbares Karussell (106) umfasst, das Halterungen (110) zum Aufhängen der Säcke (96) aufweist, die sich im rechten Winkel zur Drehachse (A106) erstrecken und die gleichmäßig um die Drehachse (A106) verteilt sind.

15. Einheit zur Behandlung von biologisch abbaubaren Abfällen nach dem vorhergehenden Anspruch, **dadurch gekennzeichnet, dass** jeder Halterung (110) ein Paar im Wesentlichen horizontaler U- oder Y-förmiger Schenkel umfasst und dass jeder Sack (96) an seinem oberen Ende (96.1) zwei Säume (112) umfasst, die so eingerichtet sind, dass sie auf die Schenkel der Halterung (110) aufgesteckt werden können, um das obere Ende (96.1) des Sacks (96) offen zu halten.

## Claims

1. Process for the treatment of biodegradable waste comprising a stage of wet methanization, to produce a gas and a digestate from ground biodegradable waste which has been mixed with a liquid phase, and a stage of phase separation, to increase the solids content of the digestate, **characterized in that** the stage of phase separation comprises a first phase, during which the digestate is sieved using a vibrating sieving device (54) in order to obtain a solids content of between 10% and 20%, and a second phase of drying, during which the sieved digestate is packaged in bags (96) each with a porous wall (98), the bags (96) filled with sieved digestate staying in a dryer (82) for a given drying period in order to obtain a solids content of greater than 50%.

2. Process for the treatment of biodegradable waste according to Claim 1, **characterized in that** the vibrating sieving device (54) used is a circular vibrating sieving device which exhibits a screen (78) with a mesh of between 0.05 and 2 mm².

3. Process for the treatment of biodegradable waste according to Claim 2, **characterized in that** the digestate is poured out in the centre of the screen (78) and gradually forms a roll which follows a spiral-shaped rib.

4. Process for the treatment of biodegradable waste according to one of the preceding claims, **characterized in that** the porous wall (98) of the bags (96) has a mesh of between 0.5 and 2 mm².

5. Process for the treatment of biodegradable waste according to one of the preceding claims, **characterized in that** the dryer (82) is fed with air which is heated using a hot fluid produced from the gas generated during the methanization stage.

6. Process for the treatment of biodegradable waste according to one of the preceding claims, **characterized in that** the drying period has a duration of greater than 10 days.

7. Process for the treatment of biodegradable waste according to one of the preceding claims, **characterized in that** the bags (96) are suspended on a carousel (106) which is swivelled around daily by a pitch corresponding to an angle equal to 360° divided by the number of days of the drying period.

8. Unit for the treatment of biodegradable waste comprising:
- a digester (10) which exhibits feeding (12) with biodegradable waste, a gas outlet (14) and a digestate outlet (16),
- at least one system for conversion of the gas produced by the digester (10) into thermal and/or electrical energy,
- a device for phase separation of the digestate,
**characterized in that** the phase separation device comprises:
- a vibrating sieving device (54) connected to the digestate outlet (16) of the digester (10) and configured so that the sieved digestate has a solids content of between 10% and 20%,
- a dryer (82) in which bags (96), filled with sieved digestate, are positioned for a given drying period, in order to obtain a solids content of greater than 50%, the bags (96) each having a porous wall (98).

9. Unit for the treatment of biodegradable waste according to the preceding claim, **characterized in that** the vibrating sieving device (54) used is a vibrating circular vibrating sieving device which exhibits a screen with a mesh of between 0.05 and 2 mm².

10. Unit for the treatment of biodegradable waste according to either of Claims 8 and 9, **characterized in that** the porous wall (98) of the bags has a mesh of between 0.5 and 2 mm².

11. Unit for the treatment of biodegradable waste according to one of Claims 8 to 10, **characterized in that** each bag has a height of between 50 and 150 cm and a section of between 20 and 50 cm.

12. Unit for the treatment of biodegradable waste according to one of Claims 8 to 11, **characterized in that** the dryer (82) comprises an insulated chamber (84), a diffusion circuit (88) configured in order to diffuse hot air into the chamber (84), an exchanger (90) configured in order to heat the air conveyed into the diffusion circuit (88) and a flow generator (98) configured in order to propel air through the exchanger (90) and then in the diffusion circuit (88).

13. Unit for the treatment of biodegradable waste according to the preceding claim, **characterized in that** it comprises at least one pipe (98) for channelling a hot fluid from the system for conversion of the gas, produced by the digester (10), up to the exchanger (90).

14. Unit for the treatment of biodegradable waste according to one of Claims 8 to 13, **characterized in that** the dryer (82) comprises at least one carousel (106), swivelling around an axis of rotation (A106), which exhibits supports (110), in order to suspend the bags (96), which extend perpendicularly to the axis of rotation (A106) and which are evenly distributed around said axis of rotation (A106).

15. Unit for the treatment of biodegradable waste according to the preceding claim, **characterized in that** each support (110) comprises a pair of substantially horizontal U- or Y-shaped branches and **in that** each bag (96) comprises, at its upper end (96.1), two hems (112) configured to be fitted over the branches of the support (110) in order to keep open the upper end (96.1) of the bag (96).
